# EUROPEAN PATENT SPECIFICATION

(11) **EP 1 710 261 B1**
(45) Date of publication and mention of the grant of the patent: **29.06.2016**
(21) Application number: 06110098.8
(22) Date of filing: 17.02.2006
(51) Int. Cl.: C08G 18/08, C08G 18/32, C08G 18/38, C08G 18/72, C09D 11/00

(54) **Urethane polymer containing latex particules**
Latexteilchen enthaltendes Urethanpolymer
Polymère d'uréthane contenant des particules de latex

(30) Priority: 01.03.2005 US 69517
(43) Date of publication of application: 11.10.2006
(73) Proprietor: HEWLETT-PACKARD DEVELOPMENT COMPANY, L.P., Houston, TX 77070 (US)
(72) Inventor: Ganapathiappan, Sivapackia, Palo Alto, CA 94304-1100 (US)
(74) Representative: Liesegang, Eva

(56) References cited:
- WO-A-98/41554
- WO-A-99/50361
- GB-A- 2 105 735

## Description

### TECHNICAL FIELD

The present invention relates generally to ink-jet printing with latex polymer containing inks. More particularly, the present invention relates to ink-jet inks having stable latex polymers.

### BACKGROUND OF THE INVENTION

The majority of commercial ink-jet inks are water-based. Thus, their constituents are generally water-soluble (*e.g*., dyes) or water dispersible (*e.g*., pigments). Furthermore, ink-jet inks have low viscosity (typically 5 cps or less).

In addition to typical color fade issues that occur in many ink-jet ink systems, ink-jet prints can also exhibit poor durability when exposed to water or high humidity. This results from the use of water-soluble and water dispersible colorants within the water-based ink. In response to this problem, polymers in the form of particulates that are compatible with ink-jet inks have been incorporated into the ink-jet inks in an attempt to improve the durability properties of the ink, such as water-fastness, light-fastness, smear-fastness and wet-smudge fastness. The polymers are typically in the form of emulsions and are based on acrylic, methacrylic, or styrene monomers.

The particles can consist of small micron or submicron hydrophobic polymeric particles of high molecular weight that are dispersed in the aqueous ink-jet ink as an emulsion. When printed as part of an ink-jet ink and upon evaporation or adsorption of the water in the ink, a latex component of the ink can form a hydrophobic print film on a media surface, entrapping and protecting the colorant within the hydrophobic print film.

Various latex particles are known in the art. One such latex particle has a size of less than 150 nm. However, this latex particle is not useful for thermal inkjet inks because of the high viscosity and lack of shear stability. Another known latex particle includes a reactive surfactant covalently bonded to the latex particle surface. Other known latex particles are formed using a seed polymerization process to produce a latex particle having a core of one or more layers, and encapsulating the core with a shell polymer.

However, such latex compositions may create pen reliability problems. Inks containing a latex component typically show a decrease in drop velocity as the drop ejection frequency of the ink-jet pen is increased beyond a certain value. The velocity reduction negatively impacts drop placement accuracy on the printed media within a moderate frequency range. At higher frequencies, the velocity reduction prevents drop ejection altogether, which can lead to agglomeration of the ink on the printer nozzle. For instance, conventional latex polymers undergo severe thermal stress before they are ejected out of the nozzle of the thermal inkjet ink pen. Most of these latex polymers are not shear-stable under these circumstances. Thus, the nozzles may become blocked, which leads to poor printability and a shorter lifetime for the nozzle.

WO 98/41554 describes a polyurethane latex.

GB 2105735 relates to a method to prepare an ink jet ink.

WO 99/50361 relates to inkjet ink compositions.

In view of the foregoing, there remains a need in the art for latex particles that are shear stable under ink-jet printing conditions, and for inks that can be used in high speed ink-jet printers that exhibit good drop placement accuracy on the print media and stable drop ejection at high drop frequencies.

### BRIEF SUMMARY OF THE INVENTION

The present invention relates to a method of making an inkjet ink composition in accordance with claims 1-8, and to a product produced by such method in accordance with claim 9.

Also disclosed is a shear stable latex particle comprises a urethane polymer having the structure

[(CH₂)₆NHCONH-R-NHCONH]ₙ,

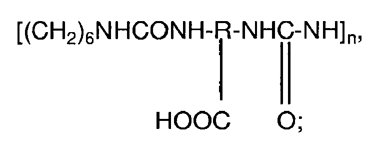

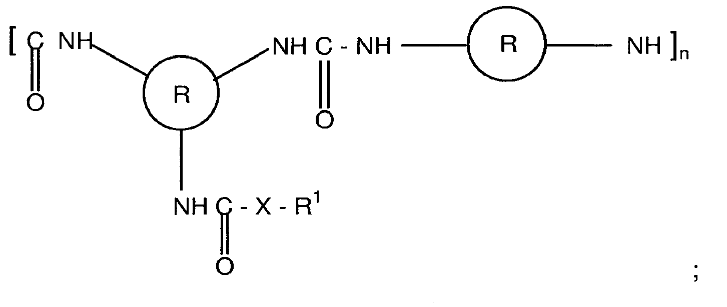

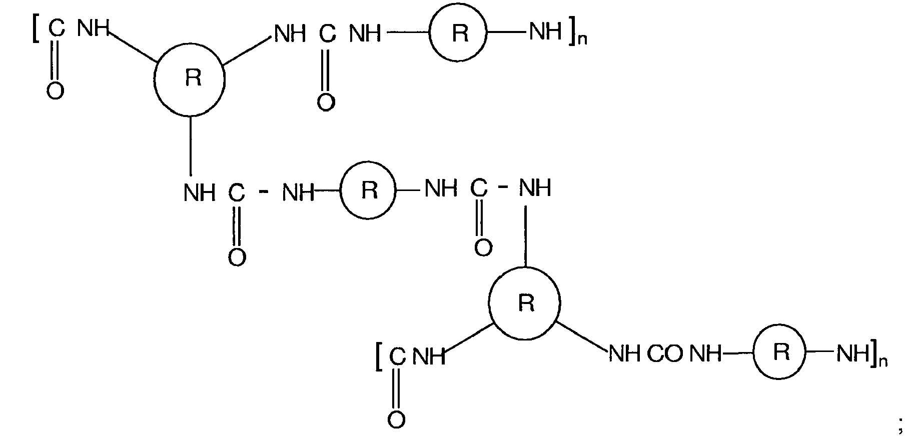

and any combination thereof. In the formulas, R may be an aliphatic or aromatic group, and R¹ may be

HOOC-(CH₂)ₘ

or

CH₃(OCH₂CH₂)ₚ,

wherein X = NH or O, m = 1-10, n is any integer, and p = 1-100.

Also disclosed is a process for making a urethane polymer includes preparing an emulsion comprising an isocyanate compound and an anionic surfactant, adding a di-, tri- or polyfunctional reagent to the emulsion, and stirring the di-, tri- or polyfunctional reagent in the emulsion, thus producing a urethane polymer.

The present invention relates to a method of forming an ink-jet composition is disclosed. The method includes mixing an isocyanate compound with an anionic surfactant and a di-, tri- or poly-functional reagent to produce a urethane based polymer particle. The urethane based polymer particle is admixed with an ink vehicle having a colorant admixed therein.

In an additional embodiment, an ink-jet ink having an aqueous ink vehicle, a colorant admixed in the ink vehicle and latex particles comprising an isocyanate compound dispersed in the ink vehicle is disclosed, wherein the isocyanate compound is not photocurable.

### DETAILED DESCRIPTION OF THE INVENTION

In each of the various embodiments, the present invention is directed to latex particles, ink-jet inks including the latex particles, and methods for the production thereof. The present invention further relates to latex particles having thermal shear stability produced with urethane chemistry, and further relates to ink-jet inks having such latex particles therein. As used herein, the term "urethane" will be used to refer to amine reacting with isocyanate to from a urea derivative and alcohol reacting with isocyanate to form a urethane derivative.

As used herein, "liquid vehicle" or "ink vehicle" will refer to the fluid in which colorants and latex particles or colloids are dispersed to form ink-jet inks. Suitable liquid vehicles and vehicle components include, but are not limited to, a variety of different agents, such as surfactants, co-solvents, buffers, biocides, sequestering agents, viscosity modifiers and water. Other compounds that may serve as or be employed in the ink vehicle include, but are not limited to, organic solvents, surface-active agents, metal chelators, and any combinations thereof. As would be apparent to one of skill in the art, the relative amounts of ink vehicle and the various constituents described herein may be varied depending on the specific pen architecture of the ink-jet printer.

In one embodiment, water may make up a substantially large percentage of the overall ink vehicle or ink composition of the present invention. For instance, in a particular embodiment, the water may comprise purified or deionized water in an amount of from about 51 to about 90 percent by weight of the ink composition.

In another embodiment, a co-solvent may be included in the ink composition. Classes of co-solvents that may be used include aliphatic alcohols, aromatic alcohols, diols, glycol ethers, polyglycol ethers, caprolactams, formamides, acetamides, long chain alcohols and any combination thereof. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, trimethylolpropane, 2-pyrrolidinone, 1,5-pentanediol and the like, and any combination thereof.

In a further embodiment, the surfactant may be present in an amount of from about 0.01% to about 10%. In a preferred embodiment, the surfactant component of the ink composition may be added up to about 5 percent by weight. In another preferred embodiment, the surfactant may be present in an amount of about 2.25% by weight of the ink composition. Such amounts may be achieved using a single surfactant or a mixture of surfactants.

Generally, the surfactants may be used to increase the penetration of the ink into the print medium. A wide array of surfactant classes may be used, including, but not limited to, cationic, anionic, zwitterionic or non-ionic surfactants. Non-limiting examples of surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, Rhodafac and any combination thereof.

In another embodiment, the ink composition may include up to about 5% by weight of a biocide, fungicide or other antimicrobial agent capable of inhibiting the growth of microorganisms. The biocides may include without limitation: NUOSEPT 95, available from Hals America (Piscataway, N.J.); PROXEL GXL, available from Zeneca (Wilmington, Del.), glutaraldehyde, available from Union Carbide Company (Bound Brook, N.J.) under the trade designation UCARCIDE 250, Vancide, available from (R.T. Vanderbilt Co.) and combinations thereof.

In yet an additional embodiment, the ink composition may include a buffer agent. The buffer agent may be present in an amount up to about 5% by weight of the ink composition. The buffer agent in the ink composition may be used to modulate pH. The buffer may be an organic-based biological buffer or an inorganic buffer. Non-limiting examples of buffers that may be used include Trizma base, available from Aldrich Chemical (Milwaukee, Wis.), 4-morpholineethanesulfonic acid (MES), 4-morpholinepropane sulfonic acid (MOPS), and combinations of any thereof.

In another embodiment, the ink composition may include sequestering agents. One example of a sequestering agent is a metal chelating agent present in the ink composition up to an amount of about 2% by weight. Metal chelating agents may be used to bind transition metal cations that may be present in the ink composition. Non-limiting examples of metal-chelating agents include Ethylenediaminetetra acetic acid (EDTA), Diethylenetriaminepentaacetic acid (DTPA), trans-1,2-diaminocyclohexanetetraacetic acid (CDTA), (ethylenedioxy) diethylenedinitrilotetraacetic acid (EGTA), other chelators that bind transition metal cations, and any combinations thereof.

As used herein, "colorant" may include dyes, pigments and/or other particles that are compatible with and that may be suspended in an ink vehicle having the latex particles of the instant invention. Pigments that may be used include, but are not limited to, self-dispersed pigments and polymer dispersed pigments. Self-dispersed pigments may include those that have been chemically surface modified with a charge or a polymeric grouping, which can aid the pigment in becoming and/or substantially remaining dispersed in a liquid vehicle. The pigment may also be a polymer-dispersed pigment that utilizes a dispersant (which may be a polymer, an oligomer, or a surfactant) in the liquid vehicle and/or in the pigment that utilizes a physical coating to aid the pigment in becoming and/or substantially remaining dispersed in a liquid vehicle. With respect to the other colorant particles that may be used, examples include magnetic particles, aluminas, silicas, and/or other ceramics, metallics, or organo-metallics, whether or not such particles impart color. The colorant may be present in an amount of from about 0.5% to 10% by weight.

As used herein, "effective amount" refers to the minimal amount of a substance or agent, which is sufficient to achieve a desired effect. Amount, concentrations, and other numerical data may be expressed or presented herein in a range format. It is to be understood that such a range format is used for convenience, and thus should be interpreted in a flexible manner to include not only numerical values associated with the limits of the range, but also to include all the individual numerical values or sub-ranges encompassed within that range as if each numerical value and sub-range is explicitly stated.

As used herein, the term "shear stability" will be used to refer to the latex particles ability to maintain their original size and/or shape under mechanical and/or thermal stress. Shear stability may be measured by subjecting the particles to mechanical and/or thermal stress and determining the change in particle size and/or shape.

The latex particles of the present invention improve the shear stability of latex dispersions by lightly cross-linking the polymeric particles within the latex particle. The light cross-linking does not affect the physical properties of the polymers. The latex particles may be incorporated into ink-jet inks and comprise an emulsion polymerization product of at least one monomer that provides dispersion and shear stability in an ink-jet pen while maintaining good room temperature film-forming properties when printed. Unlike conventional latex polymers with acrylic acid, methacrylic acid, vinylbenzoic acid or mono-methacryloyloxyethyl succinate that deform under severe thermal stress, the light cross-linking of urethane polymers of the latex particles disclosed herein improves the shear stability of the latex particles.

In another embodiment, stabilizing groups may be attached to the backbone of the urethane polymers to increase the shear stability of the latex particles. Unlike conventional acrylic polymer synthesis, the urethane chemistry employed in the instant invention does not use free-radical initiators, but rather employs addition reactions. In the conventional acrylic polymers, residual initiators, if present, affect light-fastness of prints produced with the ink-jet compositions including the acrylic polymers. Thus, use of the urethane polymers results in increased light-fastness as there will be no residual free-radial initiators. Further, the urethane bond is stronger than the bonds of the acrylic polymers in terms of photolytic degradation and, thus, the light-fastness of prints produced with ink-jet compositions including the urethane polymers is improved.

In an additional embodiment, the presence of cross-links in the urethane polymers improves the shear stability of latex particles having the cross-linked urethane polymers. In another embodiment, a film-forming property of the urethane polymer is achieved by adjusting the Tg (glass transition temperature) of the urethane polymer by increasing the alkyl chain length of the urethane polymers. The increased alkyl chain length of the urethane polymers combined with the urethane bond itself function to increase the Tg and, thus, the durability of an ink composition including latex particles have the urethane polymers. The use of urethane chemistry also enables steric stabilization of the urethane polymers which may be difficult to achieve with conventional acrylic or styrene polymers when the conventional polymers are synthesized in water.

In one embodiment, an ink-jet ink is provided and comprises effective amounts of an ink vehicle; a colorant admixed in the ink vehicle; and latex particles dispersed in the ink vehicle. In one embodiment, the latex particles include an isocyanate compound.

In another embodiment, an ink-jet ink comprises effective amounts of an ink vehicle, a colorant admixed in the ink vehicle, and latex particles dispersed in the ink vehicle. The latex particles include an isocyanate compound.

In yet another embodiment, an ink-jet ink may comprise effective amounts of an ink vehicle having a liquid density, a colorant admixed in the ink vehicle, and latex particles dispersed in the ink vehicle. The colorant may comprise any water soluble dye-based or pigment-based colorant. The latex particles are produced with a cross-linking agent and include an isocyanate compound.

Latex may be produced by lightly cross-linking polymerizable acid monomers including an isocyanate compound. The polymerizable acid monomers may be cross-linked with a cross-linking agent such as, for example, glycerol, other monomers having polymerizable di-, tri- or polyfunctional groups, or any combination thereof. The cross-linking agent may be used in a range of about 0.1%-20% by weight of a total composition, wherein the process of cross-linking does not require a photo-polymerization initiator or exposure to a certain wavelength of light to effect formation of the cross-links.

In another embodiment, the cross-linking agent is present at about 1% by weight (i.e., the final product includes 1% cross-linker by weight). The presence of 1% cross-linking agent is sufficient to enhance shear stability without unduly affecting the physical properties of the polymer. In an additional embodiment, polymers having a low glass transition temperature (e.g., less than 25ºC) may have a higher amount of the cross-linking agent (e.g., about 2% by weight).

In an additional embodiment, an ink-jet composition including a urethane polymer is printed on an ink receiving layer of a print medium. The ink-jet compositions herein may be used "as-is," that is, they do not require any further processing steps (i.e., photo-curing) for image formation.

### EXAMPLES

The following examples describe various embodiments of compositions, methods and systems for printing ink-jet ink compositions on a print medium with a pen of an ink-jet printer in accordance with the present invention. The examples are merely illustrative and are not meant to limit the scope of the present invention in any way.

### Example I

An emulsion comprising bis(aminomethyl)cyclohexane (2.75 g) in water and an anionic surfactant such as Rhodafac (0.65 g of 30% solution in water) was prepared. The di-functional reagent 1,6-diisocyanatohexane (3.25 g) was added to the emulsion with a syringe and stirred at ambient temperature overnight. Latex polymer particles were formed, wherein the latex polymer particles were stabilized with the anionic surfactant. The temperature of the reaction may be increased to expedite the reaction.

In one embodiment, the latex polymer particles have a size of between about 50 nm and 500 nm. The size of the latex polymer particles may be controlled by varying the concentration of the anionic surfactant using routine experimentation known to those of ordinary skill in the relevant art. For example, in another embodiment, the latex polymer particles have a size of about 200 nm.

Light-fastness of the latex polymer particles was tested with an ink vehicle comprising a colorant such as the magenta dye M364 and the latex polymer particles. The latex polymer particles were found to improve the light-fastness. Lightfastness may be carried out by mixing the dye solution separately with two latexes (i.e., the urethane latex of the instant invention or conventional latex prepared using free radical initiators of acrylic monomers) and following the color intensity upon exposure to ultraviolet light. The loss of color after exposure to the ultraviolet light measures the lightfastness. Typically, color fade is significant for latexes prepared with free radical initiators. However, the urethane latexes produced with the methods described herein do not use radical initiators and, thus, the lightfastness is significantly improved because of the absence of the radical initiators.

The incorporation of acid groups in the latex polymer particles at a concentration of between about 0.5% and about 15% improves the stability of the latex polymer particles. Further, the introduction of minor cross-links with multifunctional groups such as tri- and polyfunctional isocyanates, triamines, trialcohols or any combination thereof into the latex polymer particles to an extent of about 1% by weight of the latex may improve shear stability of the latex particles.

The formation of the urethane latex of Example I is illustrated with the following chemical equation:

OCN(CH₂)₆NCO + H₂N-R-NH₂ • [(CH₂)₆NHCONH-R-NHCONH]ₙ

where R may be an aliphatic or aromatic group, and n may be any integer.

### Example II

An emulsion comprising the diisocyanate OCN(CH₂)₆NCO (4.0 g) in water (32 ml) and an anionic surfactant such as Rhodafac RS 710 (0.24 g) is prepared. A mixture of bis(aminomethyl)cyclohexane (3.16 g) and diaminobutyric acid (0.88 g) is added to the emulsion. The reaction mixture is heated to about 75ºC to obtain urethane latex having an acid group as the stabilizing group.

Incorporation of acid groups in the latex polymer particles at an extent of between about 0.1% and 15% may improve the stability of the latex polymer particles. Further, the introduction of minor cross-links with multifunctional groups such as tri- and polyfunctional isocyanates, triamines or trialcohols in the latex polymer particles to an extent of about 1% by weight of the latex may improve shear stability of the latex particles.

The formation of the urethane latex of Example II is illustrated with the following chemical equation: 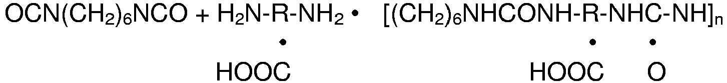 where R may be an aliphatic or aromatic group, and n may be any integer.

### Example III

An emulsion comprising the isocyanate Mundur MRS (6.0 g) available from Bayer in water (32 ml) and an anionic surfactant Rhodafac RS 710 (0.24 g) is prepared. A mixture of bis(aminomethyl)cyclohexane (3.16 g) and diaminobutyric acid (0.88 g) are added to the emulsion. The reaction mixture is heated to about 75ºC to obtain urethane latex with an acid group as the stabilizing group. In this embodiment, the two amino components (i.e., bis(aminomethyl)cyclohexane and diaminobutyric acid) may be added in a stepwise manner. For instance, the diaminobutyric acid (0.88 g) may be added and followed by the addition of bis(aminomethyl)cyclohexane (3.16 g) after a few hours to obtain the urethane latex. In another embodiment, the urethane latex may be cross-linked with triethylenetetramine.

Incorporation of acid groups in the latex polymer particles at a concentration of between about 0.1% and about 20% may improve the stability of the latex polymer particles. Further, the introduction of minor cross-links with multifunctional groups such as tri- and polyfunctional isocyanates, triamines or trialcohols in the latex polymer particles at a concentration of about 1% by weight of the latex may improve shear stability of the latex particles.

The formation of the urethane latex of Example III is illustrated with the following chemical equation: 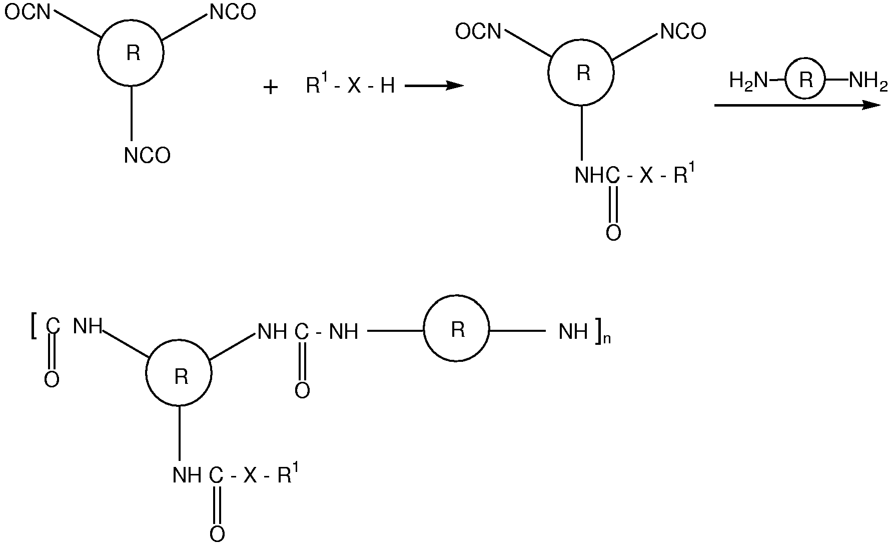 where R may be an aliphatic or aromatic group, and R¹ may be HOOC-(CH₂)ₘ or CH₃(OCH₂CH₂)ₚ, wherein X = NH or O, m = 1-10 and p = 1-100.

### Example IV

An emulsion comprising the isocyanate Mundur MRS from Bayer (6.0 g) in water (32 ml) and an anionic surfactant Rhodafac RS 710 (0.24 g) is prepared. A difunctional amino compound such as bis(aminomethyl)cyclohexane (3.16 g) is added to the emulsion. The reaction mixture is heated to about 75ºC to obtain cross-linked urethane latex.

Incorporation of acid groups in the latex polymer particles at a concentration of between about 1% and about 5% may improve the stability of the latex polymer particles. Further, the introduction of minor cross-links with multifunctional groups such as tri- and polyfunctional isocyanates, triamines or trialcohols in the latex polymer particles at a concentration of about 1% by weight of the latex may improve shear stability of the latex particles.

The formation of the urethane latex of Example IV is illustrated with the following chemical equation:

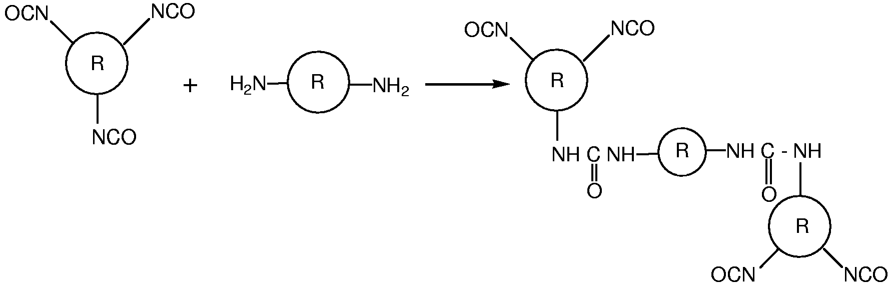

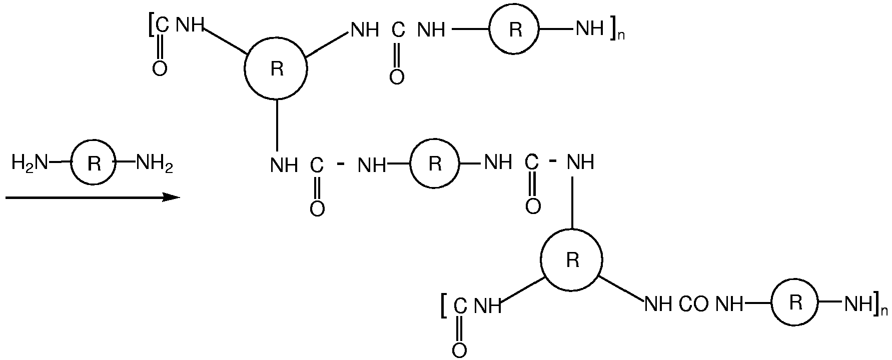

In each of the above examples, R may be any aliphatic or aromatic group such that a multifunctional isocyanate moiety may be present. The isocyanate moiety may be used in a quantity ranging from about 1% to about 10% by weight of the urethane latex. In other embodiments, the multifunctional isocyanate moiety may be replaced by tri- or multifunctional amines or alcohols. In such cases, the isocyanate moiety may be di- or polyfunctional in nature.

In yet other embodiments, the isocyanates and the amino or hydroxyl compounds of Examples I to IV may be substantially mixed together at once and emulsified in order to prepare the urethane latex. In yet an additional embodiment, the reaction mixture is heated to complete the reaction and yield the urethane latex. It will be further apparent to those having ordinary skill in the art that numerous modifications are possible by changing the isocyanates, the amines or the alcohols.

### Example V

The latex particles of each of Examples I through IV are formulated into four different aqueous ink-jet ink compositions. The ink-jet ink composition generally includes 1-10% urethane latex by weight, about 3% self-dispersed colorant by weight, about 6% 2-pyrrolidinone by weight, about 4% 1,2 hexanediol by weight, about 3% LEG-1 by weight, about 5% glycerol by weight and about 2% of miscellaneous dispersants and humectants in water. It will be apparent to those of ordinary skill in the art that routine experimentation may be used to determine the exact percentage of teach of the components used in the ink-jet ink compositions.

### Example VI

Aqueous ink-jet compositions, including the latex particles of each of Examples I through IV or combinations thereof and a colorant, are designed for use in an ink-jet printer. The aqueous ink-jet compositions are placed on an ink-receiving layer of a print medium using at least one pen of the ink-jet printer. The print medium may comprise a paper substrate or other medium capable of receiving ink thereon. The paper substrate described herein may be any type of paper substrate known to those of ordinary skill in the art including, without limitation, polyester films, resin-coated papers, or other coated papers known to those of ordinary skill in the art. The paper substrate may include, but is not limited to, one or more natural pulps, regenerated pulps, or synthetic pulps. Further, the aqueous ink-jet compositions are capable of forming an image on the print medium when applied thereto without the need for additional processing steps such as, for example, photocuring with ultraviolet or infrared radiation.

### Example VII

The urethane containing polymer particles of Examples I-IV are diluted with water to 4% by weight, heated to 60º and subjected to a shear test.

The shear test includes blending the diluted latex particles at high-speed in a blender for about 5 minutes. The size of the particles is measured before and after the blending of the shear test. Shear stable particles do not have a substantial change in particle size or result in increased viscosity after the shear test.

Although the present invention has been shown and described with respect to various exemplary embodiments, various additions, deletions, and modifications that are obvious to a person of ordinary skill in the art to which the invention pertains, even if not shown or specifically described herein, are deemed to lie within the scope of the invention as encompassed by the following claims. Further, features of elements of different embodiments may be employed in combination.

## Claims

1. A method of making an inkjet ink composition comprising:
making a stable latex particle comprising a urethane polymer by preparing an emulsion comprising an isocyanate compound and an anionic surfactant, adding a di-, tri- or polyfunctional reagent to the emulsion, and stirring the di-, tri- or polyfunctional reagent in the emulsion; and
admixing the stable latex particle with an ink vehicle having a colorant admixed therein.

2. The method according to claim 1, wherein the urethane polymer is selected from the group consisting of:
[(CH₂)₆NHCONH-R-NHCONH]ₙ; 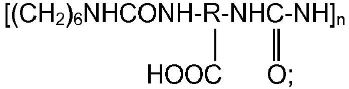 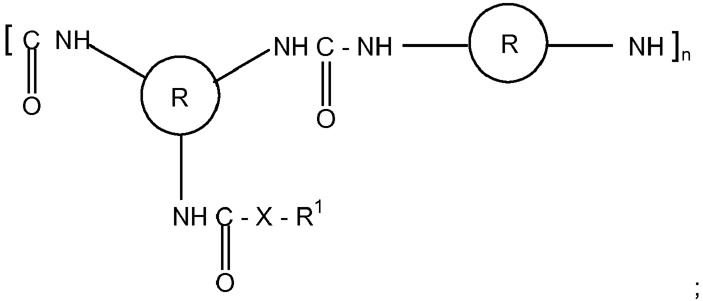 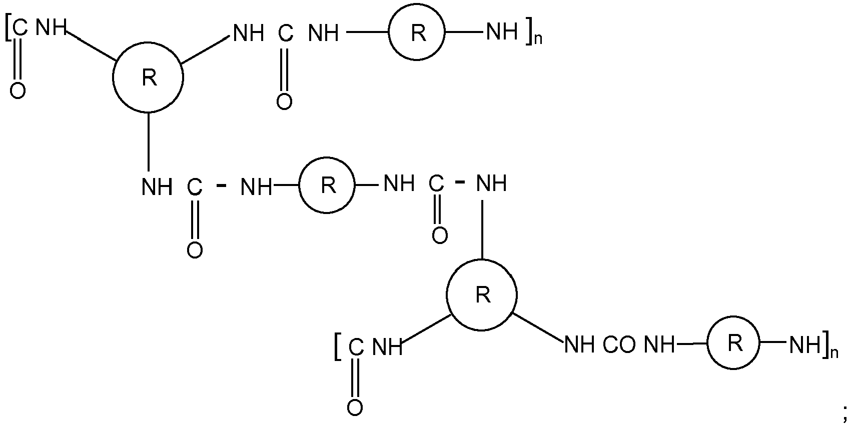
and
any combination thereof;
wherein R is an aliphatic or aromatic group,
R¹ is HOOC-(CH₂)ₘ or CH₃(OCH₂CH₂)ₚ,
X = NH or O, m = 1-10, n is any integer, and p = 1-100.

3. The method according to any one of claims 1-2, wherein the stable latex particle has a size of from about 50 nm to about 500 nm.

4. The method according to any one of claims 1-3, wherein the stable latex particle has a size of about 200 nm.

5. The method according to any one of claims 1-4, wherein the urethane polymer is cross-linked with a compound selected from the group consisting of glycerol, di-, tri- or polyfunctional isocyanates, triamines, trialcohols and any combination thereof.

6. The method according to any one of claims 1-5, wherein the isocyanate compound is selected from the group consisting of:
[(CH₂)₆NHCONH-R-NHCONH]ₙ; 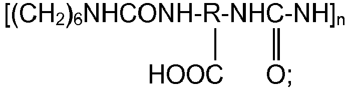 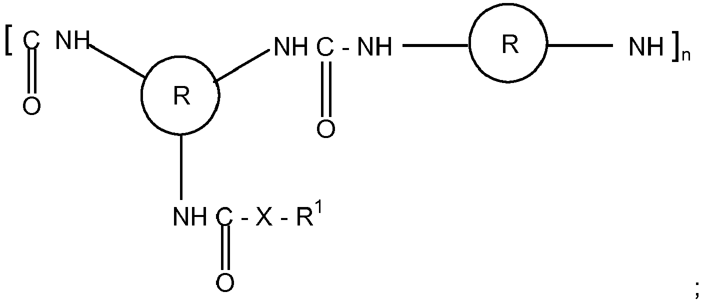 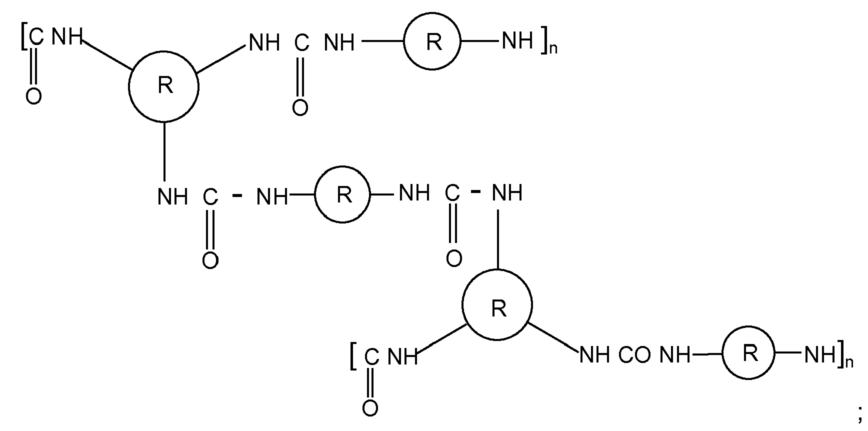
and
any combination thereof;
wherein R is an aliphatic or aromatic group;
R¹ is HOOC-(CH₂)ₘ or CH₃(OCH₂CH₂)ₚ,
X = NH or O, m = 1-10, n is any integer, and p = 1-100.

7. The method according to any one of claims 1-6, wherein the di-, tri- or polyfunctional reagent is 1,6-diisocyanatohexane.

8. The method according to any one of claims 1-7, wherein the stable latex particle is present in the ink vehicle in an amount of from about 1 to about 10%.

9. A product produced by any one of claims 1-8.

## Patentansprüche

1. Verfahren zum Ausbilden einer Tintenstrahltintenzusammensetzung, Folgendes umfassend:
Ausbilden eines stabilen Latexpartikels, das ein Urethanpolymer umfasst, durch Herstellen einer Emulsion, die eine Isocyanatverbindung und ein anionisches Tensid umfasst, Hinzufügen eines di-, tri- öder polyfunktionalen Reagens zu der Emulsion und Rühren des di-, tri- oder polyfunktionalen Reagens in der Emulsion; und
Beimischen des stabilen Latexpartikels zu einer Tintenträgersubstanz, der ein Farbmittel beigemischt ist.

2. Verfahren nach Anspruch 1, wobei das Urethanpolymer ausgewählt ist aus der Gruppe bestehend aus:
[(CH₂)₆NHCONH-R-NHCONH]ₙ; 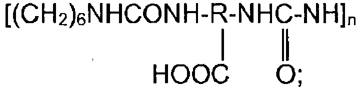 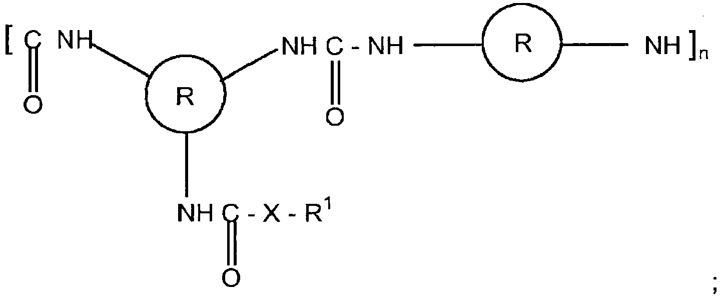 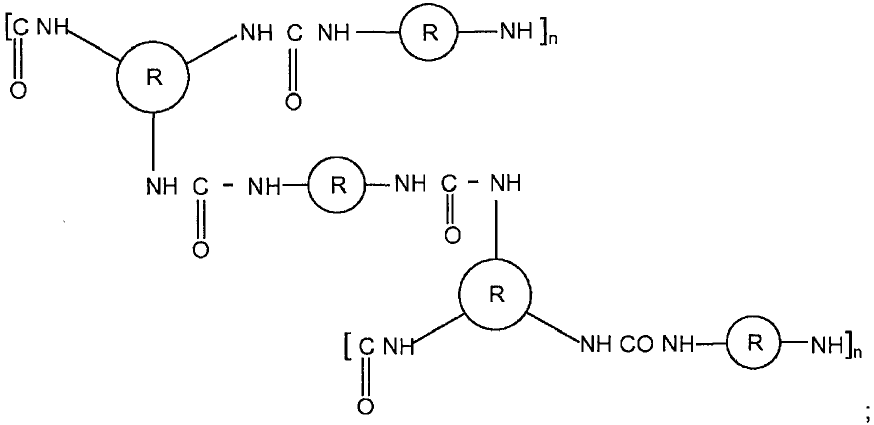
sowie jeglicher Kombination aus diesen;
wobei R eine aliphatische oder aromatische Gruppe ist,
R¹ HOOC-(CH₂)ₘ oder CH₃(OCH₂CH₂)ₚ ist,
X = NH oder O, m = 1-10, n eine beliebige Ganzzahl ist und p = 1-100.

3. Verfahren nach einem der Ansprüche 1-2, wobei das stabile Latexpartikel eine Größe von etwa 50 nm bis etwa 500 nm aufweist.

4. Verfahren nach einem der Ansprüche 1-3, wobei das stabile Latexpartikel eine Größe von etwa 200 nm aufweist.

5. Verfahren nach einem der Ansprüche 1-4, wobei das Urethanpolymer mit einer Verbindung vernetzt ist, die ausgewählt ist aus der Gruppe bestehend aus Glycerin, di-, tri- oder polyfunktionalen Isocyanaten, Triaminen, Trialkoholen und jeglicher Kombination aus diesen.

6. Verfahren nach einem der Ansprüche 1-5, wobei die Isocyanatverbindung ausgewählt ist aus der Gruppe bestehend aus:
[(CH₂)₆NHCONH-R-NHCONH]ₙ; 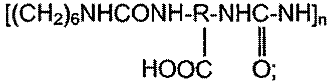 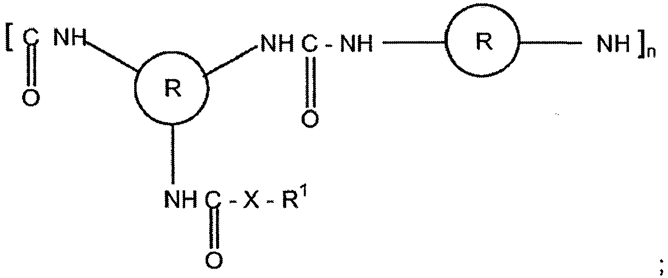 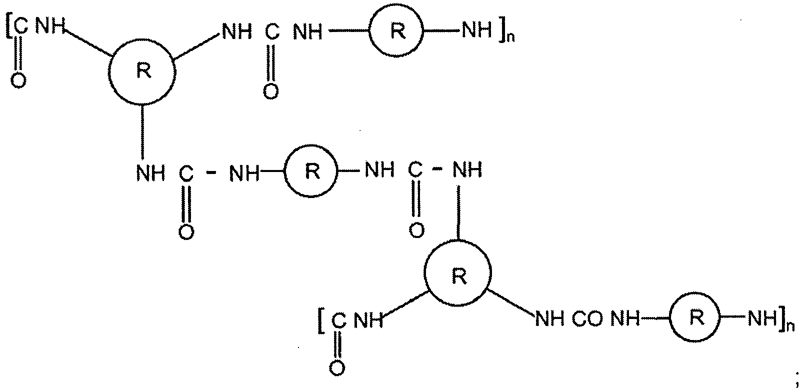
sowie
jeglicher Kombination aus diesen;
wobei R eine aliphatische oder aromatische Gruppe ist;
R¹ HOOC-(CH₂)ₘ oder CH₃(OCH₂CH₂)ₚ ist,
X = NH oder O, m = 1-10, n eine beliebige Ganzzahl ist und p = 1-100.

7. Verfahren nach einem der Ansprüche 1-6, wobei das di-, tri- oder polyfunktionale Reagens 1,6-Diisocyanatohexan ist.

8. Verfahren nach einem der Ansprüche 1-7, wobei das stabile Latexpartikel in der Tintenträgersubstanz in einer Menge von etwa 1 bis etwa 10 % vorliegt.

9. Produkt, hergestellt nach einem der Ansprüche 1-8.

## Revendications

1. Procédé de fabrication d'une composition d'encre pour jet d'encre, comprenant :
la réalisation d'une particule stable en latex contenant un polymère d'uréthane, par préparation d'une émulsion contenant un composé d'isocyanate et un tensio-actif anionique, l'ajout d'un réactif di-, tri- ou polyfonctionnel dans l'émulsion, et l'agitation du réactif di-, tri- ou polyfonctionnel dans l'émulsion ; et
le mélange de la particule stable de latex avec un véhicule d'encre contenant un colorant qui s'y trouve mélangé.

2. Procédé selon la revendication 1, dans lequel le polymère d'uréthane est choisi dans l'ensemble constitué de :
[(CH₂)₆NHCONH-R-NHCONH]ₙ; 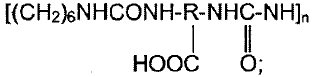 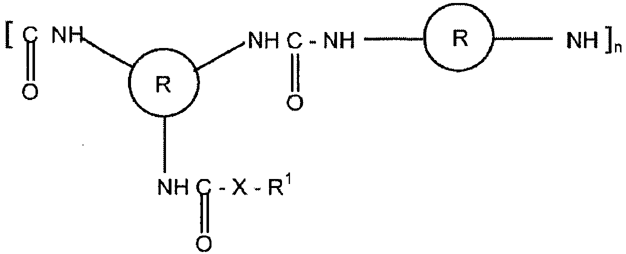 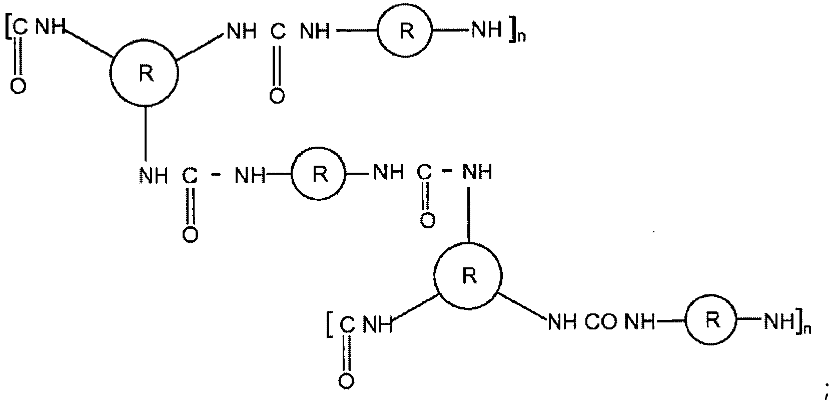
et
toute combinaison de ceux-ci ;
où R représente un groupe aliphatique ou aromatique,
R¹ représente HOOC-(CH₂)ₘ ou CH₃(OCH₂CH₂)ₚ,
X = NH ou O, m = 1 à 10, n représente tout nombre entier et p = 1 à 100.

3. Procédé selon l'une quelconque des revendications 1 ou 2, dans lequel la particule de latex stable a une dimension comprise entre environ 50 nm et environ 500 nm.

4. Procédé selon l'une quelconque des revendications 1 à 3, dans lequel la particule de latex stable a une dimension proche de 200 nm.

5. Procédé selon l'une quelconque des revendications 1 à 4, dans lequel polymère d'uréthane est réticulé avec un composé choisi dans l'ensemble constitué de glycérol, d'isocyanates di-, tri- ou polyfonctionnels, de triamines, de trialcools et de toute combinaison de ceux-ci.

6. Procédé selon l'une quelconque des revendications 1 à 5, dans lequel le composé d'isocyanate est choisi dans l'ensemble constitué de :
[(CH₂)₆NHCONH-R-NHCONH]ₙ; 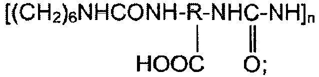 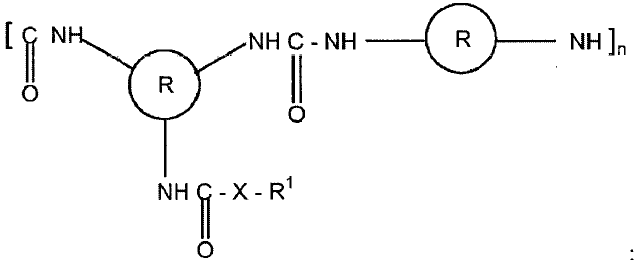 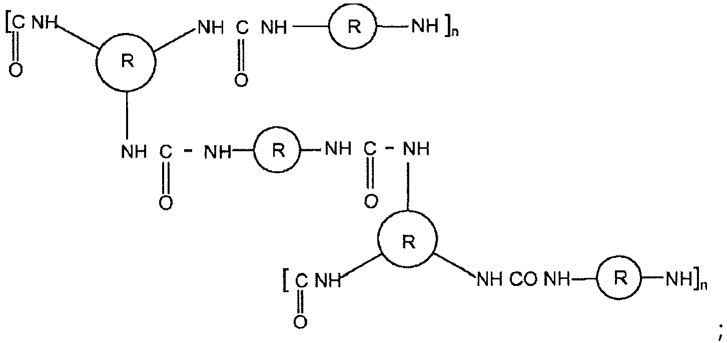
et
toute combinaison de ceux-ci ;
où R représente un groupe aliphatique ou aromatique ;
R¹ représente HOOC-(CH₂)ₘ ou CH₃(OCH₂CH₂)ₚ,
X = NH ou O, m = 1 à 10, n représente tout nombre entier et p = 1 à 100.

7. Procédé selon l'une quelconque des revendications 1 à 6, dans lequel le réactif di-, tri- ou poly-fonctionnel est le 1,6-diisocyanatohexane.

8. Procédé selon l'une quelconque des revendications 1 à 7, dans lequel la particule de latex stable est présente dans le véhicule de l'encre à raison d'environ 1 à environ 10 %.

9. Produit produit selon l'une quelconque des revendications 1 à 8.
